# EUROPÄISCHE PATENTSCHRIFT

(11) **EP 0 416 561 B1**
(45) Veröffentlichungstag und Bekanntmachung des Hinweises auf die Patenterteilung: **31.08.1994**
(21) Anmeldenummer: 90117015.9
(22) Anmeldetag: 04.09.1990
(51) Int. Cl.: A23L 1/015

(54) **Verfahren zur Entfernung von Cholesterin bzw. Cholesterinestern aus Lebensmitteln**
Process for the removal of cholesterol respectively esters of cholesterol from food
Procédé pour éliminer le cholestérol, respectivement les esters du cholestérol de denrées alimentaires

(30) Priorität: 06.09.1989 DE 3929555
(43) Veröffentlichungstag der Anmeldung: 13.03.1991
(73) Patentinhaber: SKW Trostberg Aktiengesellschaft, 83308 Trostberg (DE)
(72) Erfinder: Cully, Jan, Dr., D-8200 Rosenheim (DE); Vollbrecht, Heinz-Rüdiger, Dr., D-8226 Altenmarkt (DE); Schütz, Erwin, Dr., D-8223 Trostberg (DE)
(74) Vertreter: Huber, Bernhard, Dipl.-Chem.

(56) Entgegenhaltungen:
- EP-A- 0 356 165
- WO-A-90/02788
- CH-A- 643 713
- AGRICULTURAL AND BIOLOGICAL CHEMSITRY Band 50, Nr. 5, Mai 1986,Seiten 1209-1215, Tokyo, JP; A. SHISHIKURA et al.: "Modification of Butter Oilby Extraction with Supercritical Carbon Dioxide"
- JOURNAL OF FOOD SCIENCE Band 53, Nr. 6, November-Dezember 1988, Seiten 1656-1658,1661, Chicago, IL, US; I. HARDARDOTTIR et al.:"Extraction of Lipid and Cholesterol from Fish Muscle with SupercriticalFluids"
- BIOFUTUR Juni 1989, Seiten 43-47, FR;M. PERRUT: "Les fluides supercritiques: un nouveau type d'extraction"
- DATENBANK WPIL/DERWENT AN-88-224919 (32), DerwentPublications Ltd., London, GB; & JP- A - 63160669 (KURARAY KK) 04.07.1988
- DATENBANK WPI/DERWENT AN-75-02576w (02), DerwentPublications Ltd., London; GB; & JP- A - 49055700 (KANEBO LTD.) 30.05.1974
- DATENBANK WPIL/DERWENT AN87-208714 (30), Derwent
- Publications Ltd., London, GB; & JP- A - 62134042 (ZH RYOSHOKU KENKYUK) 17.06.1987
- DATENBANK WPIL/DERWENT AN-84-234484 (38), DerwentPublications Ltd., London, GB; & JP- A - 59140299 (Q.P. CORP.) 11.08.1984

## Beschreibung

Die vorliegende Erfindung betrifft ein mehrstufiges Verfahren zur Entfernung von Cholesterin und Cholesterinestern aus Lebensmitteln durch Extraktion mit verdichtetem CO₂.

Cholesterin und Cholesterinester sind lipophile Substanzen, die in zahlreichen wichtigen Lebensmitteln tierischen Ursprungs wie z.B. Eigelb, Fleisch, tierischen Fetten usw. vorkommen.

Erhöhte Cholesterinwerte im Blutserum des Menschen stellen bekanntermaßen einen erhöhten Risikofaktor für Arteriosklerose bzw. eine koronare Herzkrankheit dar.

Durch eine Reduzierung der Cholesterinzufuhr aus Lebensmitteln ist es in pathologischen Fällen oft möglich, wieder normale Cholesterinwerte im Blutserum zu erreichen. Aus diesem Grund zielen Bestrebungen der Lebensmittelindustrie darauf ab, eine deutliche Reduzierung des Gehalts an Cholesterin und Cholesterinestern in fettreichen Lebensmitteln tierischen Ursprungs zu erzielen.

Ein wesentliches Problem ist hierbei, die sensorischen und ernährungsphysiologischen Eigenschaften der Lebensmittel nach Entfernung von Cholesterinkomponenten weitgehend zu erhalten.

Es sind zwar schon eine Reihe von Verfahren zur Isolierung von Cholesterin bzw. Cholesterinestern bekannt, doch eignen sich diese Methoden nicht zur Reduzierung des Cholesteringehaltes in Lebensmitteln, da sie chemische Veränderungen wichtiger Bestandteile des Ausgangsmaterials (wie z.B. Proteine, Triglyceride usw.) bewirken.

Ein relativ schonendes Verfahren zur Entfernung von Cholesterin und Cholesterinestern aus Lebensmitteln ist die Extraktion mit überkritischem CO₂ (vgl. V. Krukonis, Supercritical Fluid Processing, International Symposium on Supercritical Fluids, Nice, 1988, und A. Budde und D. Knorr, Reduction of Cholesterol in Egg Powder and Whole Eggs by Extraction with Supercritical Carbon Dioxide, Fifth International Congress on Engineering and Food, Cologne, 1989).

Dieses Verfahren zeichnet sich zwar durch die physiologische Unbedenklichkeit des Extraktionsmittels (CO₂) aus, doch lassen sich nach den bekannten Verfahren Cholesterin und Cholesterinester bei schonenden Bedingungen nicht ausreichend selektiv aus Lebensmitteln abtrennen, weil auch Triglyceride und andere lipophile Bestandteile durch Behandlung mit überkritischem CO₂ aus dem Extraktionsgut entfernt werden. Eine Verbesserung der Selektivität zugunsten der Cholesterinkomponenten bei der Extraktion ist durch Temperaturerhöhung über 80°C zwar grundsätzlich möglich, doch wirkt sich dies negativ auf die Qualität des erhaltenen Produktes aus.

Gemäß einem Artikel von Rizvi und A. Benkrid (A Process for Cholesterol Reduction and Fractionation of Animal Fats using Supercritical Fluids, Fifth International Congress on Engineering and Food, Cologne, 1989) wird vorgeschlagen, tierische Fette zu fraktionieren und dabei mitextrahiertes Cholesterin an einem nicht näher bezeichneten festen Adsorptionsmittel zu adsorbieren. Damit wird jedoch nicht das angestrebte Ziel erreicht, eine Veränderung der sensorischen und ernährungsphysiologischen Eigenschaften von Lebensmitteln durch Verlust wichtiger, von Cholesterin verschiedenen lipophilen Bestandteilen zu verhindern.

WO 90/02788, veröffentlicht am 22. März 1990, offenbart ein Verfahren zur Entfernung von Sterolen, z.B. Cholesterin, aus lipidhaltigen Materialien durch Extraktion mit einem Hochdruckfluid, wie verdichtetem CO₂, wobei zur selektiven Adsorption der Sterole ein Adsorptionsmaterial verwendet wird, ausgewählt aus der Gruppe umfassend Calciumhydroxid, Calciumoxid, Calciumcarbonat, Magnesiumcarbonat, Magnesiumhydroxid oder dergleichen. Saure Oxide wie Kieselsäure, Florisil und Aluminiumoxid sind gemäß diesem Dokument für die selektive Adsorption von Sterolen nicht geeignet.

EP-A-0 356 165, veröffentlicht am 28. Februar 1990, betrifft ein Verfahren zum Entfernen von Sterolen, z.B. Cholesterin und/oder Lipiden aus Nahrungsmitteln unter Verwendung eines überkritischen physiologisch akzeptablen Gases, z.B. CO₂, vorzugsweise bei einem Druck im Bereich von 50 bis 400 bar und einer Temperatur im Bereich von 30 bis 60°C. Als Mittel zur selektiven Adsorption von Sterolen aus dem Strom des verdichteten Gases werden Oxide, Hydroxide, Carbonate, Sulfate, Carboxylate und andere sauerstoffhaltige Verbindungen von Magnesium, Calcium, Strontium, Barium, Cadmium, Kobalt, Mangan, Eisen, Nickel und Zink sowie organische Adsorptionsmittel, wie etwa Kohlenhydrate oder komplexe Verbindungen, wie Mineralien des Hydrotalcittyps offenbart. Die Adsorption von Sterolen an Aluminiumoxid, Kieselgel, Florisil, Magnesiumsilikat oder Kombinationen davon wird in diesem Dokument nicht offenbart.

Die Arbeit von Shishikura et al. (Agric. Biol. Chem. 50 (1986), 1209-1215) offenbart ein Verfahren zur Verringerung der Cholesterinkonzentration in Butteröl durch Extraktion mit überkritischem Kohlendioxid und Adsorption des extrahierten Cholesterins an Silikagel. Ein Rezirkulieren des überwiegend cholesterinfreien, aber mit weiteren lipophilen Bestandteilen gesättigten CO₂-Stroms wird in diesem Dokument nicht gelehrt.

Perrut (Biofutur (Juni 1989), 43-47) beschreibt allgemein Extraktionsverfahren mit überkritischem Fluid. Eine Entfernung von Cholesterin aus Lebensmitteln durch überkritisches CO₂ und die selektive Adsorption des extrahierten Cholesterins werden nicht offenbart.

Der vorliegenden Erfindung lag daher die Aufgabe zugrunde, ein Verfahren zur Entfernung von Cholesterin oder/und Cholesterinestern aus Lebensmitteln durch Extraktion mit verdichtetem CO₂ zu entwickeln, welches die genannten Nachteile von bekannten Verfahren nicht aufweist, sondern eine weitgehend selektive Abtrennung der Cholesterinkomponenten unter schonenden Bedingungen ermöglicht und gleichzeitig die Verluste an weiteren wichtigen lipophilen Bestandteilen auf ein Minimum reduziert.

Diese Aufgabe wird dadurch gelöst, daß man
a) das cholesterinhaltige Extraktionsgut mit verdichtetem CO₂ bei einem Druck oberhalb von 100 bar und einer Temperatur von 10 bis 90°C behandelt,
b) aus dem mit Cholesterin oder/und Cholesterinestern sowie weiteren lipophilen Bestandteilen beladenen CO₂-Gasstrom die Cholesterinkomponenten durch Adsorption an ein festes Adsorptionsmittel ausgewählt aus der Gruppe Aluminiumoxid, Kieselgel, Florisil, Magnesiumsilikat oder Kombinationen davon oder durch Adduktbildung mit Zink-(II)-chlorid selektiv entfernt und
c) mindestens einen Teil des überwiegend von Cholesterinkomponenten freien, aber mit weiteren lipophilen Bestandteilen gesättigten CO₂-Strom erneut über das behandelte Extraktionsgut leitet oder/und für die Extraktion von unbehandeltem cholesterinhaltigem Extraktionsgut heranzieht.

Es hat sich nämlich überraschenderweise gezeigt, daß man auf diese Weise fetthaltige Lebensmittel mit niedrigem Gesamtcholesteringehalt und guten sensorischen Eigenschaften erhält.

Das erfindungsgemaße Verfahren besteht aus insgesamt drei Stufen.

In der ersten Stufe wird das cholesterinhaltige Extraktionsgut mit verdichtetem CO₂ behandelt, wobei als Ausgangsmaterial alle fetthaltigen Lebensmittel, wie z.B. Eigelbpulver, flüssiges Eigelb, Butterfett, Fleisch u.a. geeignet sind. Die Extraktionsbedingungen können je nach Ausgangsmaterial in weiten Grenzen variiert werden, doch empfiehlt es sich aus wirtschaftlichen Gründen, die Extraktion vorzugsweise oberhalb eines Drucks von 100 bar und bei einer Temperatur von 10 bis 90°C durchzuführen. Besonders bevorzugt wird die Extraktion bei einem Druck von 200 bis 300 bar und einer Temperatur von 30 bis 60°C vorgenommen, weil es unter diesen Bedingungen zu keiner thermischen Belastung des Ausgangsmaterials kommt und sich die Cholesterinkomponenten im verdichteten CO₂ gut lösen.

Während des Extraktionsvorgangs findet eine Beladung des verdichteten CO₂ mit Cholesterinkomponenten und weiteren lipophilen Substanzen, wie z.B. Triglyceriden, Phospholipiden, Farbstoffen usw. statt. Aus diesem beladenen CO₂-Strom werden in der zweiten Stufe die Cholesterinkomponenten möglichst selektiv abgetrennt, d.h. die weiteren lipophilen Bestandteile sollen möglichst im CO₂ gelöst bleiben. Diese selektive Abtrennung der Cholesterinkomponenten ist auf mehreren Wegen möglich. Einerseits können diese Substanzen an ein geeignetes festes Adsorptionsmittel adsorbiert werden, wobei als Adsorptionsmittel Aluminiumoxid, Kieselgel, Florisil, Magnesiumsilikat oder Kombinationen davon eingesetzt werden können. Andererseits kann der CO₂-Gasstrom durch oder über eine Schüttung von Zink-(II)-chlorid. geleitet werden, das mit Cholosterin bzw. Cholesterinestern in CO₂ unlösliche Addukte bildet.

Die Menge des eingesetzten Adsorptionsmittels bzw. Adduktbildners hängt vor allem vom Gesamtcholesteringehalt des jeweils verwendeten Extraktionsgutes ab und beträgt in der Regel 1 bis 100 g pro g der zu entfernenden Cholesterinkomponenten.

Ein besonderer Vorteil des erfindungsgemäßen Verfahrens besteht darin, daß die Abtrennung der Cholesterinkomponenten bei den gleichen Druck- und Temperaturbedingungen wie die Extraktion erfolgen kann, so daß keine großen Energieverluste in Kauf genommen werden müssen.

Für die dritte Stufe des erfindungsgemäßen Verfahrens ist es wesentlich, daß nach Abtrennung der Cholesterinkomponenten die noch gelösten, nicht Cholesterin-artigen lipophilen Bestandteile im CO₂ nicht abgeschieden werden. Dagegen wird der CO₂-Strom mindestens teilweise entweder erneut über das behandelte Extraktionsgut geleitet oder aber für die Extraktion von noch unbehandeltem Extraktionsgut herangezogen. In beiden Verfahrensvarianten lösen sich bei erneuter Extraktion nur noch geringe Mengen an nicht Cholesterin-artigen lipophilen Bestandteilen im CO₂-Strom, weil das CO₂ mit diesen Stoffen bereits beladen ist. Um die Extraktion von nicht aus Cholesterinkomponenten bestehenden lipophilen Stoffen bei der Durchführung des erfindungsgemäßen Verfahrens möglichst gering zu halten, wählt man vorzugsweise die CO₂-Gasmengen bzw. die Extraktionsbedingungen in der ersten Stufe so, daß dort schon eine möglichst weitgehende Beladung des CO₂ erfolgen kann, d.h. das CO₂ sollte nach der ersten Extraktion möglichst vollständig mit lipophilen Bestandteilen gesättigt sein.

Nach selektiver Abtrennung der Cholesterinkomponenten durch Adsorption bzw. Adduktbildung kann der erneut über ein Extraktionsgut geführte, überwiegend Cholesterinfreie, aber mit weiteren lipophilen Bestandteilen gesättigte CO₂-Strom bei den folgenden Extraktionsvorgängen Cholesterinkomponenten mit sehr hoher Selektivität aus Lebensmitteln entfernen.

Der spezifische CO₂-Verbrauch, d.h. die Menge, die im Kreislauf umgewälzt wird, hängt im wesentlichen von der Art und Menge des Extraktionsgutes ab und beträgt in der Regel 60 bis 300 kg CO₂ pro kg Extraktionsgut.

Es hat sich gezeigt, daß für beide obengenannten Verfahrensvarianten, die auch in Kombination miteinander durchgeführt werden können, die Verluste an nicht aus Cholesterinkomponenten bestehenden lipophilen Bestandteilen unter 10 % liegen.

Mit Hilfe des erfindungsgemäßen Verfahrens ist es somit möglich, cholesterinarme Lebensmittel mit guten sensorischen Eigenschaften herzustellen, deren Gesamtcholesteringehalt um ca. 60 bis 90 % reduziert ist.

Die nachfolgenden Beispiele sollen die Erfindung näher erläutern.

### Beispiel 1

Entfernung von Cholesterin bzw. Cholesterinestern aus Eigelbpulver.

3 kg Eigelbpulver mit einem Gesamtcholesteringehalt von 2,4 % wurden bei 280 bar und 50°C mit CO₂ extrahiert, welches im Kreislauf geführt wurde.

Nach der Extraktion wurde der mit Cholesterin und Cholesterinestern sowie weiteren lipophilen Bestandteilen beladene CO₂-Gasstrom bei gleichen Druck- und Temperaturbedingungen durch einen dem Extraktionsbehälter nachgeschalteten Adsorber geleitet, der mit 1 kg Al₂O₃ beschickt worden war. Anschließend wurde der cholesterinarme und im wesentlichen nur noch die nicht aus Cholesterinkomponenten bestehenden lipophilen Bestandteile enthaltende CO₂-Gasstrom erneut in den Extraktionsbehälter mit dem vorbehandelten Extraktionsgut geleitet und recyclisiert.

Der Extraktionskreislauf wurde 3 Stunden aufrechterhalten, der spezifische Extraktionsmittelbedarf betrug 240 kg CO₂/kg Eigelbpulver.

Aus dem Eigelbpulver wurden 85 % der Gesamtmenge von Cholesterin und Cholesterinestern entfernt, während die Verluste der nicht aus Cholesterinkomponenten bestehenden lipophilen Bestandteile ca. 8 % betrugen.

### Beispiel 2

Entfernung von Cholesterin bzw. Cholesterinestern aus Butterfett.

2 kg Butterfett mit einem Gesamtcholesteringehalt von 0,4 % wurden bei 280 bar und 60°C mit CO₂ extrahiert, welches im Kreislauf geführt wurde.

Nach der Extraktion wurde der CO₂-Gasstrom durch einen nachgeschalteten Adsorber geleitet, der mit 0,3 kg ZnCl₂ beschickt worden war. Nach Abtrennung der Cholesterinkomponenten im Adsorber bei gleichen Druck- und Temperaturbedingungen wie bei der Extraktion wurde der CO₂-Gasstrom über bereits extrahiertes Material zurückgeführt.

Der Extraktionskreislauf wurde 3 Stunden aufrechterhalten, der spezifische Extraktionsmittelbedarf betrug 120 kg CO₂ pro kg Butterfett.

Aus dem Butterfett wurden 75 % der Gesamtmenge von Cholesterin und Cholesterinestern entfernt. Die Verluste an nicht aus Cholesterinkomponenten bestehenden lipophilen Bestandteilen betrugen ca. 8 %.

## Patentansprüche

1. Verfahren zur Entfernung von Cholesterin oder/und Cholesterinestern aus Lebensmitteln durch Extraktion mit verdichtetem CO₂,
**dadurch gekennzeichnet**,
daß man
a) das cholesterinhaltige Extraktionsgut mit verdichtetem CO₂ bei einem Druck oberhalb von 100 bar und einer Temperatur von 10 bis 90°C behandelt,
b) aus dem mit Cholesterin oder/und Cholesterinestern sowie weiteren lipophilen Bestandteilen beladenen CO₂-Gasstrom die Cholesterinkomponenten durch Adsorption an ein festes Adsorptionsmittel ausgewählt aus der Gruppe Aluminiumoxid, Kieselgel, Florisil, Magnesiumsilikat oder Kombinationen davon oder durch Adduktbildung mit Zink-(II)-chlorid selektiv entfernt und
c) mindestens einen Teil des überwiegend von Cholesterinkomponenten freien, aber mit weiteren lipophilen Bestandteilen gesättigten CO₂-Strom erneut über das behandelte Extraktionsgut leitet oder/und für die Extraktion von unbehandeltem cholesterinhaltigem Extraktionsgut heranzieht.

2. Verfahren nach Anspruch 1, **dadurch gekennzeichnet,** daß man die Extraktion bei einem Druck von 200 bis 300 bar und einer Temperatur von 30 bis 60°C durchführt.

3. Verfahren nach Anspruch 1 oder 2, **dadurch gekennzeichnet,** daß man die selektive Entfernung von Cholesterinkomponenten aus dem CO₂-Gasstrom durch Adsorption an ein festes Adsorptionsmittel vornimmt.

4. Verfahren nach Anspruch 3, **dadurch gekennzeichnet,** daß man als Adsorptionsmittel Aluminiumoxid verwendet.

5. Verfahren nach Anspruch 1 oder 2, **dadurch gekennzeichnet,** daß man Cholesterinkomponenten durch Bildung von CO₂-unlöslichen Addukten selektiv aus dem CO₂-Gasstrom entfernt.

6. Verfahren nach einem der Ansprüche 1 bis 5, **dadurch gekennzeichnet,** daß man 1 bis 100 g Adsorptionsmittel oder/und Adduktbildner pro g zu entfernende Cholesterinkomponenten einsetzt.

7. Verfahren nach einem der Ansprüche 1 bis 6, **dadurch gekennzeichnet,** daß man die selektive Entfernung von Cholesterinkomponenten bei den gleichen Druck- und Temperaturbedingungen vornimmt wie die Extraktion.

8. Verfahren nach einem der Ansprüche 1 bis 7, **dadurch gekennzeichnet,** daß der spezifische CO₂-Bedarf 60 bis 300 kg CO₂ pro kg Extraktionsgut beträgt.

## Claims

1. Process for the removal of cholesterol and/or cholesterol eaters from foodstuffs by extraction with compressed CO₂, characterised in that one
a) treats the cholesterol-containing extraction material with compressed CO₂ at a pressure of above 100 bar and at a temperature of from 10 to 90°C,
b) selectively removes the cholesterol components from the CO₂ gas stream loaded with cholesterol and/or cholesterol eaters, as well as further lipophilic components, by adsorption on a solid adsorption agent selected from the group aluminium oxide, silica gel, Florisil, magnesium silicate or combinations thereof or by adduct formation with zinc (II) chloride and
c) again passes at least a part of the CO₂ current substantially free from cholesterol components but saturated with further lipophilic components over the treated extraction material and/or uses for the extraction of untreated, cholesterol-containing extraction material.

2. Process according to claim 1, characterised in that one carries out the extraction at a pressure of 200 to 300 bar and a temperature of 30 to 60°C.

3. Process according to claim 1 or 2, characterised in that one carries out the selective removal of cholesterol components from the CO₂ gas current by adsorption on a solid adsorption agent.

4. Process according to claim 3, characterised in that one uses aluminium oxide as adsorption agent.

5. Process according to claim 1 or 2, characterised in that one selectively removes the cholesterol components from the CO₂ gas current by formation of CO₂-insoluble adducts.

6. Process according to one of claims 1 to 5, characterised in that one uses 1 to 100 g of adsorption. agent and/or adduct former per g of cholesterol components to be removed.

7. Process according to one of claims 1 to 6, characterised in that one carries out the selective removal of cholesterol components under the same pressure and temperature conditions as the extraction.

8. Process according to one of claims 1 to 7, characterised in that the specific CO₂ requirement amounts to 60 to 300 kg of CO₂ per kg of extraction material.

## Revendications

1. Procédé pour l'élimination du cholestérol ou/et des esters de cholestérol de produits alimentaires par extraction avec du CO₂ comprimé, caractérisé en ce que
a) l'on traite le produit d'extraction contenant du cholestérol avec du CO₂ comprimé sous une pression supérieure à 100 bars et à une température de 10 à 90°C,
b) on élimine sélectivement, à partir du courant de CO₂ gazeux chargé de cholestérol ou/et d'esters de cholestérol ainsi que d'autres constituants lipophiles, les composants de cholestérol par adsorption sur un adsorbant solide choisi dans le groupe des oxyde d'aluminum, gel de silice, Florisil, silicate de magnésum ou de leurs combinaisons ou par formation de produits d'addition avec du chlorure de zinc(II) et
c) on fait passer à nouveau sur le produit d'extraction traité au moins une partie du courant de CO₂ essentiellement exempt de composants de cholestérol, mais saturé d'autres constituants lipophiles ou/et on y fait appel pour l'extraction du produit d'extraction contenant du cholestérol non traité.

2. Procédé selon la revendication 1, caractérisé en ce qu'on effectue l'extraction sous une pression de 200 à 300 bars et à une température de 30 à 60°C.

3. Procédé selon la revendication 1 ou 2, caractérisé en ce qu'on procède à l'élimination sélective des composants de cholestérol à partir du courant de CO₂ gazeux par adsorption sur un adsorbant solide.

4. Procédé selon la revendication 3, caractérisé en ce que l'on emploie de l'oxyde d'aluminium comme adsorbant.

5. Procédé selon la revendication 1 ou 2, caractérisé en ce qu'on élimine sélectivement les composants de cholestérol du courant de CO₂ gazeux par formation de produits d'addition insolubles dans CO₂.

6. Procédé selon l'une des revendications 1 à 5, caractérisé en ce qu'on met en oeuvre 1 à 100 g d'adsorbant ou/et de générateur de produit d'addition par g de composants de cholestérol à éliminer.

7. Procédé selon l'une des revendications 1 à 6, caractérisé en ce qu'on effectue l'élimination sélective des composants de cholestérol dans les mêmes conditions de pression et de température que pour l'extraction.

8. Procédé selon l'une des revendications 1 à 7, caractérisé en ce que la consommation spécifique de CO₂ s'élève à 60 - 300 kg de CO₂ par kg de produit d'extraction.
